# EUROPEAN PATENT APPLICATION

(11) **EP 4 818 045 A1**
(43) Date of publication of application: **07.10.2026**
(21) Application number: 26167668.8
(22) Date of filing: 25.03.2026
(51) Int. Cl.: B64D 13/06

(54) **MULTI-GRAVITATIONAL FORCE VAPOR CYCLE RECEIVER**

(30) Priority: 01.04.2025 US 202519097372
(71) Applicant: Honeywell International Inc., Charlotte, NC 28202 (US)
(72) Inventor: RAHIM, Faranak, Charlotte, 28202 (US); FRIESTAD, Ronald J., Charlotte, 28202 (US); ZUG, Andrew, Charlotte, 28202 (US); ZHANG, Tong, Charlotte, 28202 (US); O'BRIEN, Thomas, Charlotte, 28202 (US)
(74) Representative: Haseltine Lake Kempner LLP

(57) **Abstract**

A thermal energy management system (100) for a vehicle (10) includes an expansion valve (110) and a receiver (120) positioned upstream of the expansion valve. The receiver (120) includes a shell (126) configured to contain a volume of a working fluid. The shell includes an inlet (122) configured to receive the working fluid as a mixture of vapor phase working fluid and liquid phase working fluid and an outlet (124) configured to outlet the working fluid primarily in the liquid phase, even when the vehicle undergoes a change in orientation.

## Description

### TECHNICAL FIELD

The present disclosure relates to thermal energy management systems for vehicles.

### BACKGROUND

Thermal storage management systems may be included on vehicles to cool components and systems of the vehicle. The thermal energy management system may remove and/or quench a load of thermal energy generated on-board the vehicle. In examples where the vehicle is an aircraft, the thermal energy management system may be configured to operate during flight of the aircraft.

### SUMMARY

In one or more examples, a thermal energy management system for a vehicle includes an expansion valve and a receiver positioned upstream of the expansion valve. The receiver includes a shell configured to contain a volume of a working fluid. The shell includes an inlet configured to receive the working fluid as a mixture of vapor phase working fluid and liquid phase working fluid and an outlet configured to outlet the working fluid primarily in the liquid phase, even when the vehicle undergoes a change in orientation.

In one or more examples, a receiver for a thermal energy management system for a vehicle includes a shell configured to contain a volume of a working fluid. The shell includes an inlet configured to receive the working fluid as a mixture of vapor phase working fluid and liquid phase working fluid and an outlet configured to outlet the working fluid primarily in the liquid phase, even when the vehicle undergoes a change in orientation.

In one or more examples, a vehicle includes a thermal energy management system. The thermal energy management system includes an expansion valve and a receiver positioned upstream of the expansion valve. The receiver includes a shell configured to contain a volume of a working fluid. The shell includes an inlet configured to receive the working fluid as a mixture of vapor phase working fluid and liquid phase working fluid and an outlet configured to outlet the working fluid primarily in the liquid phase, even when the vehicle undergoes a change in orientation.

In one or more examples, a technique for providing thermal management for a vehicle includes receiving a working fluid as a mixture of working fluid as a mixture of vapor-phase working fluid and liquid-phase working fluid at an inlet of a shell of a receiver. The receiver is positioned upstream of an expansion valve of a thermal energy management system of a vehicle. The technique includes containing a volume of the working fluid in the shell. The technique also includes outputting the working fluid from an outlet of the shell of the receiver primarily in the liquid phase, even when the vehicle undergoes a change in orientation.

This summary is intended to provide an overview of the subject matter described in this disclosure. It is not intended to provide an exclusive or exhaustive explanation of the systems, devices, and methods described in detail within the accompanying drawings and description below. Further details of one or more examples are set forth in the accompanying drawings and the description below. Other features, objects, and advantages will be apparent from the description and drawings, and from the statements provided below.

### BRIEF DESCRIPTION OF THE FIGURES

FIG. 1 is a top view schematic diagram of an example vehicle, in accordance with one or more examples of the present disclosure.
FIG. 2 is a schematic diagram of a thermal energy management system of FIG. 1.
FIG. 3 is a conceptual cross-sectional side view illustrating a receiver of the thermal energy management system of FIG. 2.
FIG. 4A is a conceptual front view illustrating an example vehicle oriented right side up, and FIG. 4B is a conceptual cross-sectional side view of a receiver of a thermal energy management system of the vehicle when the vehicle is oriented as shown in FIG. 4A.
FIG. 5A is a conceptual front view of the example vehicle of FIG. 4A oriented sideways, and FIG. 5B is a conceptual cross-sectional side view of the receiver of FIG. 4B when the vehicle is oriented as shown in FIG. 5A.
FIG. 6A is a conceptual front view of the example vehicle of FIG. 4A oriented upside, and FIG. 6B is a conceptual cross-sectional side view of the receiver of FIG. 4B when the vehicle is oriented as shown in FIG. 6A.
FIG. 7 is a flowchart illustrating an example technique for providing thermal management for an aircraft, in accordance with one or more examples of the present disclosure.

### DETAILED DESCRIPTION

This disclosure generally relates to thermal energy management systems for vehicles. More specifically, the disclosure describes a receiver which may be included in a vehicle's thermal energy management system. The receiver may be configured to function even when the vehicle changes orientation relative to gravity. In this way, the disclosure may enable improved performance of the thermal energy management system of a vehicle, such as an aircraft, which may change in orientation relative to gravity during operation.

Components and systems of a vehicle may generate thermal energy during operation of the vehicle. The vehicle may include a thermal energy management system which routes thermal energy away from temperature-sensitive components and quenches or dissipates the thermal energy into the environment. The thermal energy management system may include a vapor cycle.

The vapor cycle may circulate a working fluid, which may include a refrigerant, throughout a closed loop to remove thermal energy from heat-generating components or systems of the vehicle and dissipate the thermal energy into the environment. For example, the vapor cycle may circulate the working fluid to an evaporator, where thermal energy is received by the working fluid to evaporate the working fluid into a vapor-phase working fluid. The vapor-phase working fluid may be routed to a compressor, where work may be input to pressurize the vapor-phase working fluid. The high-pressure, vapor-phase working fluid may be routed to a condenser, where thermal energy is released by the working fluid as the working fluid condenses into liquid-phase working fluid. The working fluid may be transported to a receiver, where the liquid-phase working fluid is collected before being outlet to an expansion valve, which may reduce the pressure of the working fluid, before the working fluid is circulated back to the evaporator to complete another cycle.

The condenser may not completely condense the vapor-phase working fluid to liquid-phase working fluid. As such, the receiver may receive the working fluid as a mixture of vapor-phase working fluid and liquid-phase working fluid. It may be important for the receiver to outlet working fluid to the expansion valve primarily in the liquid phase, which may enable improved system performance.

Certain thermal energy management systems may include a receiver that is configured to outlet working fluid primarily in the liquid phase by including a shell which contains a volume of working fluid. A volume of liquid-phase working fluid may collect in the bottom of the shell, and an outlet may be defined at or near the bottom of the shell to outlet the liquid-phase working fluid. Such a receiver may perform adequately in a stationary application, or in an application on a vehicle which does not change in orientation.

However, such a receiver may not outlet working fluid primarily in the liquid phase when included on certain types of vehicles. For example, some vehicles, such as aircraft, and even certain marine or land-based vehicles, may change their orientation with respect to a vector defined by a gravitational force in operation. For example, an aircraft may roll, spin, dive, accelerate, or decelerate during operation, and one or more of these maneuvers may allow vapor-phase working fluid to be output from an outlet positioned at the bottom of the receiver, and the vapor-phase working fluid may enter the expansion valve. When vapor-phase working fluid enters the expansion valve, efficiency and/or performance of the thermal energy management system may be reduced.

In accordance with the present disclosure, a thermal energy management system for a vehicle includes a receiver that is configured to outlet the working fluid primarily in the liquid phase, even when the vehicle undergoes a change in orientation. Accordingly, a receiver of the current disclosure may enable relatively more efficient and/or high-performance of the thermal energy management system throughout operation of the vehicle, when compared to other receivers. The word "primarily," as used in this context, may mean that the working fluid outlet from the receiver is at least 50 mole percent liquid, or at least 90 mole percent liquid, or at least 95 mole percent liquid, or at least 99 mole percent liquid. In some cases, the working fluid outlet from the receiver is completely in the liquid phase, such that no vapor-phase working fluid is outlet from the receiver. In such examples, the working fluid outlet from the receiver in only the liquid phase.

In some examples, the change in orientation may be such that the vehicle is upside down relative to a vector defined by a gravitational force when the vehicle is grounded and at rest. For example, the vehicle may be an aircraft, and the receiver may outlet working fluid only in the liquid phase when the aircraft performs a roll, flies upside down, spins, accelerates, decelerates, or the like. Put differently, the force of gravity may define a vector which points at zero degrees of rotation when the vehicle is grounded and at rest. The receiver may be configured to outlet working fluid in primarily the liquid phase when the vehicle rotates to 180 degrees of rotation relative to the vector.

In some examples, the receiver may be positioned upstream of the expansion valve, and may include a shell which contains a volume of working fluid. The shell may define an inlet which receives the working fluid as a mixture of vapor-phase working fluid and liquid-phase working fluid. The shell may further define an outlet which outlets the working fluid primarily (e.g., completely) in the liquid phase. In some examples, both the inlet and the outlet may be positioned on an upper portion of the shell relative to a vector defined by a gravitational force when the vehicle is grounded and at rest.

In some examples, an outlet tube may extend from a proximal end at the outlet of the shell to a distal end which is below a minimum liquid level of the liquid-phase working fluid in the shell. In this way, the outlet on the upper portion of the shell may be fluidically connected to the volume of liquid-phase working fluid contained in the shell. The liquid-phase working fluid may flow through the outlet tube, out of the outlet, and to the downstream expansion valve. Accordingly, working fluid in the liquid phase may be outlet from the receiver.

When the vehicle changes in orientation, such as when an aircraft banks sideways during a turn, or even flies upside down during a more complex maneuver, the orientation of the shell may change accordingly. Furthermore, the position of the volume of liquid-phase working fluid in the shell may change when the vehicle changes orientation, for example by the force of gravity or acceleration. If the outlet tube were rigid and fixed in a particular place in the shell, the change in position of the liquid-phase working fluid may result in the distal end of the outlet tube no longer being in the volume of liquid-phase working fluid, which may result in vapor-phase working fluid being outlet from the receiver. As described above, vapor-phase working fluid being outlet from the receiver may deleteriously impact the performance of downstream components such as the expansion valve and/or the evaporator.

In some examples, the outlet tube is a flexible to which changes shape and/pr orientation in response to the change in orientation of the vehicle such that the distal end of the outlet tube remains in the volume of liquid-phase working fluid. Put differently, the flexible outlet tube may follow the volume of liquid-phase working fluid around the shell during a change in orientation of the vehicle, which may reduce or eliminate the possibility of vapor-phase working fluid exiting the receiver and entering the downstream expansion valve. In examples where the outlet tube is flexible, the outlet tube may include a suitable polymeric material such as one or more of silicone, rubber, vinyl, polyethylene, polypropylene, or the like. Additionally, the outlet tube may include features such as corrugation, ribs, braids, or the like, which may improve flexibility of the outlet tube and/or improve durability and useful life of the outlet tube.

In some examples, a gravitational weight may be coupled to or formed integrally with the outlet tube at a distal portion (e.g., a distal end) of the outlet tube. The gravitational weight may add mass to the distal end of the flexible outlet tube, which may improve the flexibility of the tube and improve contact of the distal end of the outlet tube with the volume of liquid-phase working fluid in the shell. In examples where a gravitational weight is included, the gravitational weight may be the same or a different material as the outlet tube. In some cases, the gravitational weight may include a metallic material such as aluminum, iron, copper, nickel, or the like.

In examples where a flexible outlet tube is included, a support member may surround a middle portion of the outlet tube and lock the middle portion of the outlet tube in a fixed position during a change in orientation of the vehicle. Inclusion of the support member may improve contact between the distal end of the outlet tube and the volume of liquid-phase working fluid in the shell by minimizing dragging, tangling, coiling, or other problems which may arise from an unsupported outlet tube.

In some examples, the shell of the receiver may be substantially spherical or substantially ellipsoidal in shape. The word "substantially," in this context, is meant to include departures from the specified shapes to account for manufacturing requirements and tolerances. A spherical or ellipsoidal shape may help minimize sloshing of the liquid-phase working fluid during a change in orientation of the vehicle. Furthermore, a spherical or ellipsoidal shape may improve contact between the distal end of the outlet tube and the volume of liquid-phase working fluid because points on the inner surface of the shell may be equal or close to equal in distance from a center of the sphere or ellipsoid, which may be at or near the point the support member locks the middle portion of the outlet tube. In such cases, the inlet and the outlet may be separated from each other by an arc angle of less than about 45 degrees, such as less than about 30 degrees.

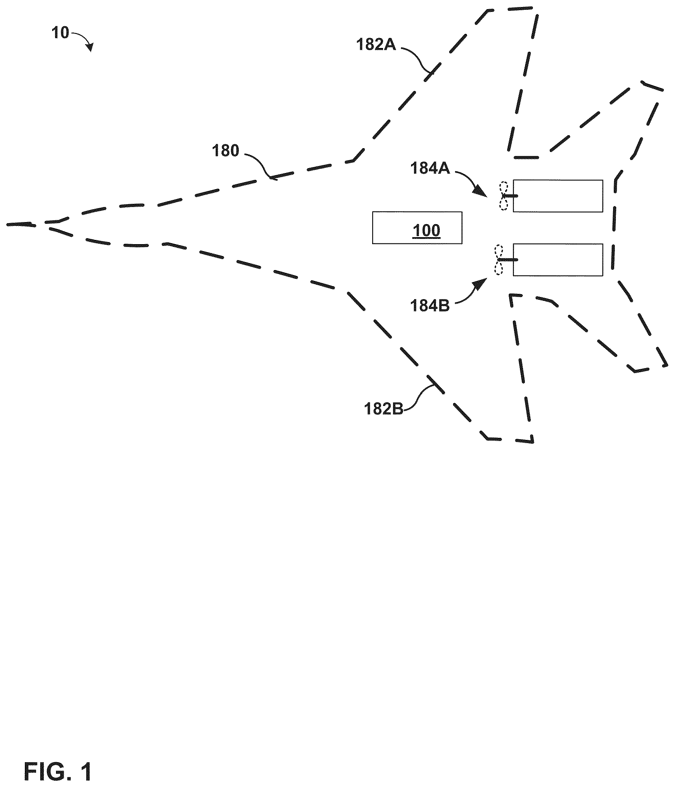

FIG. 1 is a conceptual diagram illustrating an example vehicle 10. Vehicle 10 Vehicle 10 of FIG. 1 may be an aircraft, as illustrated, although other types of vehicles are also considered. For example, vehicle 10 may be a ground vehicle or marine vehicle in other examples. Vehicle 10 includes fuselage 180, wings 182A and 182B, a propulsion system that includes gas turbine engines 184A and 184B, and a thermal energy management system 100.

In the illustrated example, vehicle 10 is a high-performance aircraft which may change its orientation with respect to a vector defined by a force of gravity during operation. For example, vehicle 10 may roll, spin, dive, accelerate, or decelerate during operation. Thermal energy management system 100 may manage thermal energy generated by components or systems of vehicle 10, even during these operations. For example, as will be described below, thermal energy management system 100 may include a receiver which enables improved performance of thermal energy management system 100 before, during, and after a change in orientation of vehicle 10.

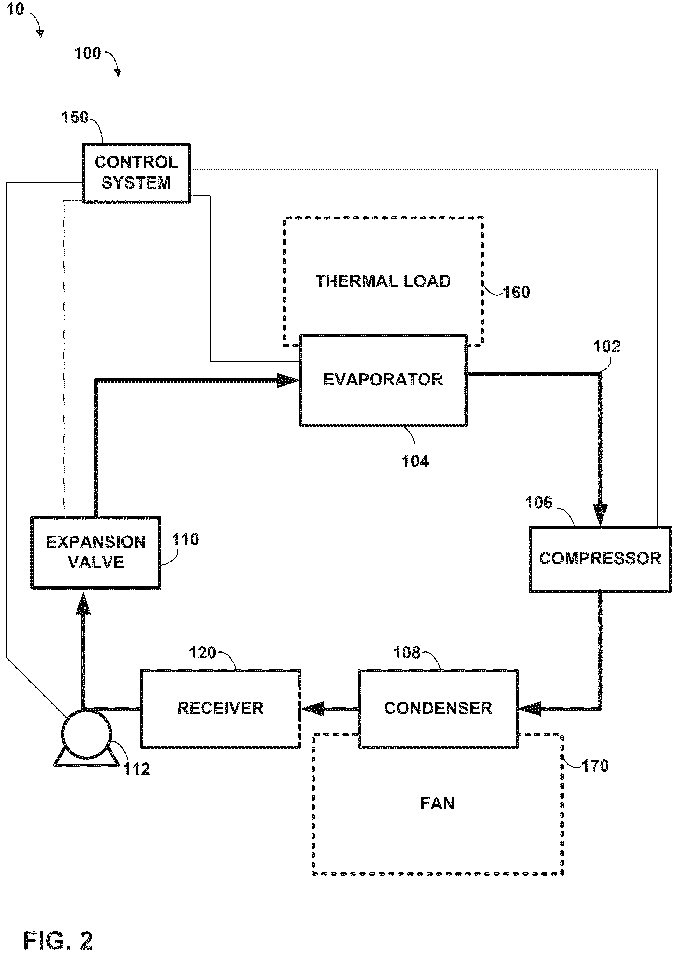

FIG. 2 is a schematic diagram of thermal energy management system 100. Thermal energy management system 100 may be onboard vehicle 10 of FIG. 1.

Thermal energy management system 100 may include vapor cycle 102. Vapor cycle 102 may be a closed loop cooling system which circulates a working fluid. The working fluid may include a refrigerant, and the refrigerant may be selectively tailored to change between liquid-phase working fluid and vapor-phase working fluid as it circulates through vapor cycle 102. In some examples, the refrigerant may include one or more of water, glycol, ammonia, isobutane, hydrocarbons, carbon dioxide, hydrochlorofluorocarbons, chlorofluorocarbons, or the like.

Vapor cycle 102 includes evaporator 104, compressor 106, condenser 108, expansion valve 110, pump 112, and receiver 120. In operation, the working fluid may be circulated by pump 112 under control of control system 150 to evaporator 104. The working fluid may receive thermal energy from thermal load 160, which may include any thermal energy generated onboard vehicle 10, such as thermal energy generated by engines, motors, generators, cabin air systems, electronics, avionics, weapons systems, or the like. The thermal energy received by the working fluid from thermal load 160 may evaporate the working fluid into vapor-phase working fluid in evaporator 104. The vapor-phase working fluid may be routed to compressor 106, where work may be input to pressurize the vapor-phase working fluid. The high-pressure, vapor-phase working fluid may be routed to condenser 108, where thermal energy may be released by the working fluid as the working fluid condenses into liquid-phase working fluid. Optionally, the thermal energy may be transmitted to the environment by fan 170 blowing air across coils of condenser 108. Additionally, or alternatively, another cooling loop may interact with vapor cycle 102 at condenser 108, and thermal energy may be transmitted to the additional cooling loop at condenser 108.

The working fluid may be routed to receiver 120, where the liquid-phase working fluid is collected before being outlet to expansion valve 110, which may reduce the pressure of the working fluid, before the working fluid is circulated back to evaporator 104 to complete another cycle, removing and dissipating thermal energy from thermal load 160 with each pass through vapor cycle 102.

Condenser 108 may not completely condense the vapor-phase working fluid to liquid-phase working fluid. As such, receiver 120 may receive the working fluid as a mixture of vapor-phase working fluid and liquid-phase working fluid. It may be important for receiver 120 to outlet working fluid to expansion valve 110, which may be positioned downstream of receiver 120 (e.g., directly downstream, with no intervening components) primarily (e.g., only) in the liquid phase, which may enable improved system performance.

As discussed above, vehicle 10 may change in orientation with respect to a vector defined by a gravitational force in operation. For example, vehicle 10 may operate upside down during flight relative to a vector defined by the gravitational force when vehicle 10 is grounded and at rest. In accordance with the present disclosure, receiver 120 may outlet the working fluid primarily in the liquid phase, even when vehicle 10 undergoes a change in orientation, such as flying sideways or upside down. Accordingly, receiver 120 may enable relatively more efficient and/or high-performance of thermal energy management system 100 throughout operation of vehicle 10, when compared to other receivers.

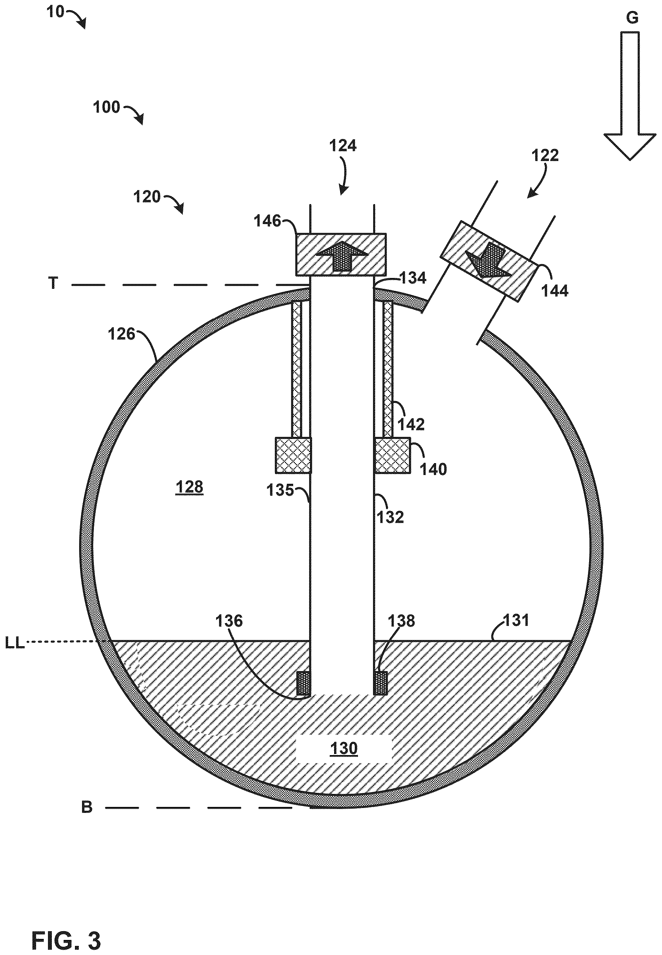

FIG. 3 is a conceptual cross-sectional side view illustrating receiver 120 of thermal energy management system 100 of FIG. 2. Receiver 120 is illustrated in an orientation that receiver 120 defines when vehicle 10 of FIG. 1 is grounded and at rest. As such, vector G defined by a force of gravity points downward from top T of receiver 120 to bottom B.

Receiver 120 includes inlet 122 and outlet 124 defined by shell 126. Shell 126 may contain cavity 128 which is configured to contain a volume of working fluid. The working fluid may include a mixture of vapor-phase working fluid and liquid-phase working fluid received by inlet 122 from condenser 108 (FIG. 2). Shell 126 may include any suitable material which contains a pressurized mixture of liquid and gaseous working fluid. For example, shell 126 may include metallic, ceramic, and/or polymeric materials. In some examples, as illustrated, shell 126 may be substantially spherical in shape. In other examples, shell 126 may be substantially ellipsoidal, or may define another shape or combination of shapes.

Inlet 122 and outlet 124 may each be defined on an upper portion of shell 126. In other words, both inlet 122 and outlet 124 may be defined closer to top T than bottom B of receiver 120. In examples where shell 126 is spherical in shape, inlet 122 and outlet 124 of receiver 120 may be separated by less than 45 degrees, such as less than 30 degrees. The angle may be an arc angle defined by the center of the sphere and the center of inlet 122 and outlet 124 at shell 126. Inlet 122 may be fluidically coupled to check valve 144, which is a one-way valve configured to allow working fluid to flow in only one direction, from condenser 108 (FIG. 2) into shell 126. Similarly, outlet 124 may be fluidically coupled to check valve 146, which is a one-way valve configured to flow only in one direction, from cavity 128 of shell 126 to expansion valve 110 (FIG. 2) downstream of receiver 120.

The working fluid contained in receiver 120 may include volume of liquid 130. Volume of liquid 130 may be liquid-phase working fluid, which may collect toward bottom B due to the gravitational force. Vapor cycle 102 (FIG. 2) may be initially filled with working fluid such that surface 131 of volume of liquid 130 does not drop below a minimum liquid level LL within cavity 128.

Outlet tube 132 may extend from proximal end 134 at outlet 124 of shell 126 to distal end 136, which is below minimum liquid level LL of volume of liquid 130. Put differently, outlet tube 132 may have a length selectively tailored such that distal end 136 is within volume of liquid 130 throughout operations of vehicle 10. In this way, outlet 124 on the upper portion of shell 126 may be fluidically connected to volume of liquid 130. Liquid-phase working fluid from volume of liquid 130 may flow through outlet tube 132 to expansion valve 110 (FIG. 2), such as by actuation of pump 112 (FIG. 2). The liquid-phase working fluid may be substantially free (e.g., completely free) of vapor-phase working fluid. Accordingly, working fluid in the liquid phase may be outlet from receiver 120.

In some examples, the length of outlet tube 132 may be such that distal end 136 nearly contacts (e.g., is within about 5 mm) of shell 126. Such an arrangement may enable improved contact between distal end 136 and volume of liquid 130.

In some examples, outlet tube 132 may be flexible tube which changes shape and/or orientation in response to a change in orientation of vehicle 10 such that distal end 136 of outlet tube 132 remains in volume of liquid 130. In examples where outlet tube 132 is flexible, outlet tube 132 may include a suitable polymeric material such as one or more of silicone, rubber, vinyl, polyethylene, polypropylene, or the like. Additionally, outlet tube 132 may include features such as corrugation, ribs, braids, or the like, which may improve flexibility of outlet tube 132 and/or improve durability and useful life of outlet tube 132.

In some examples, gravitational weight 138 may be coupled to or formed integrally with outlet tube 132 at a distal portion (e.g., closer to distal end 136 than proximal end 134) of outlet tube 132. Gravitational weight 138 may add mass to distal end 136 of outlet tube 132. Gravitational weight 138 may be the same or a different material as outlet tube 132. In some cases, gravitational weight 138 may include a metallic material such as aluminum, iron, copper, nickel, or the like.

In some examples, support member 140 may at least partially surround middle portion 135 of outlet tube 132. Support member 140 may lock middle portion 135 of outlet tube 132 in a fixed position during a change in orientation of vehicle 10. Inclusion of support member 140 may help to ensure distal end 136 of outlet tube 132 remains below surface 131 of volume of liquid 130 by minimizing dragging, tangling, coiling, or other problems with outlet tube 132. Support member 140 may be mounted to shell 126 via one or more support arms 142. Middle portion 135 of outlet tube 132 may include the point halfway between proximal end 134 and distal end 136 along the length of outlet tube 132. Middle portion 135 may also include 25 percent of the length of outlet tube 132 extending in each direction from the point halfway between proximal end 234 and distal end 236.

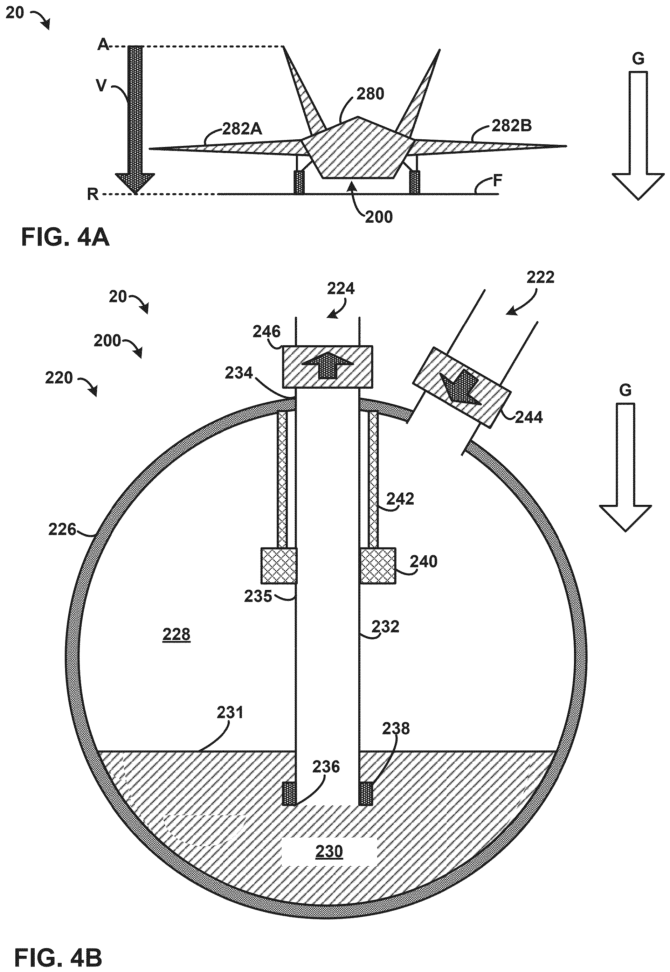

FIG. 4A is a conceptual front view illustrating example vehicle 20 oriented right side up when stationary and on the ground. Vehicle 20 may be described similarly to vehicle 10 of FIGS. 1-3, where similar reference numerals indicate similar elements. FIG. 4B is a conceptual cross-sectional side view of receiver 220 of thermal energy management system 200 of vehicle 20 when vehicle 20 is oriented as shown in FIG. 4A.

With concurrent reference to FIGS. 4A-4B, vehicle 20 includes fuselage 280, wings 282, and thermal energy management system 200. As illustrated, vehicle 20 is at rest on ground F. In such an orientation, vector G defined by the force of gravity has the same direction as vector V defined as extending from top A to bottom R of vehicle 20. Put differently, since vector G and vector V point in the same direction, vehicle 20 is oriented at zero degrees of rotation. Accordingly, receiver 220 of FIG. 4B is aligned similarly to the orientation shown in FIG. 3.

Receiver 220 includes shell 226 which contains cavity 228 and defines inlet 222 and outlet 224. Check valves 244, 246 ensure that working fluid flows only in one direction from inlet 222 to outlet 224 through receiver 220. Volume of liquid 230 is the liquid-phase working fluid inside cavity 228.

Outlet tube 232 extends from proximal end 234 to distal end 236. Distal end 236 is below surface 231 of volume of liquid 230. Gravitational weight 238 is coupled to a distal portion of outlet tube 232. Middle portion 235 of outlet tube 232 is at least partially surrounded by support member 240. Support member 240 is mounted to shell 226 via one or more support arms 242. In operation, receiver 220 operates as described above with respect to receiver 120 of FIG. 3.

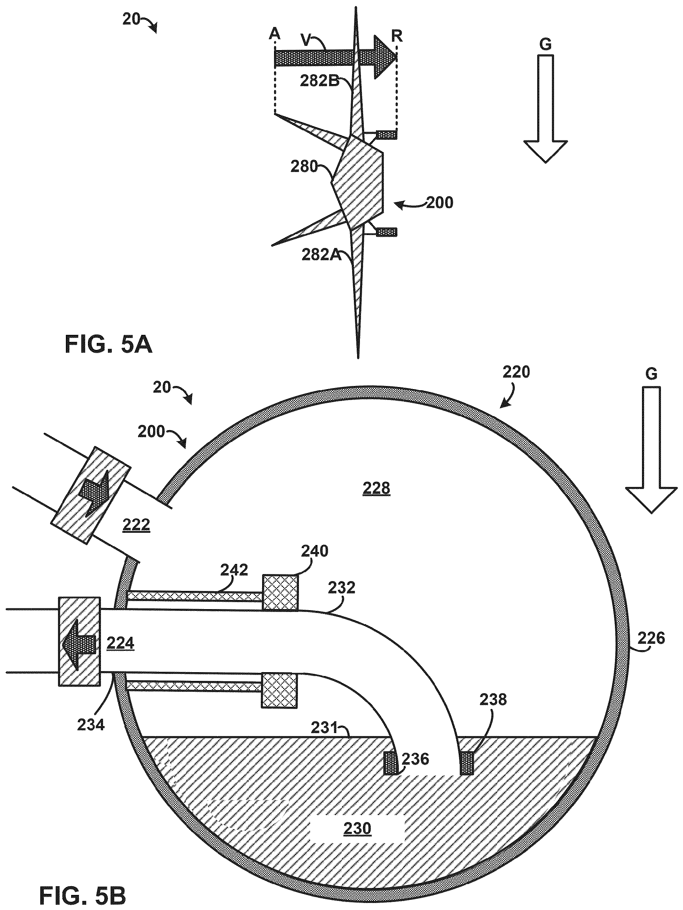

FIG. 5A is a conceptual front view of the example vehicle 20 of FIG. 4A in flight with a changed orientation relative to the orientation of FIG. 4A. For example, vehicle 20 is oriented sideways in FIG. 5A, as opposed to the right side up orientation of FIG 4A. As such, vector V points in a direction that is substantially perpendicular to vector G defined by a gravitational force. Put differently, since vector G and vector V point in perpendicular directions, vehicle 20 is oriented at ninety degrees of rotation. The orientation of FIG. 5A may occur during a spin, dive, roll, turn, or other maneuver of vehicle 20 during operation. FIG. 5B is a conceptual cross-sectional side view of receiver 220 when vehicle 20 is oriented as shown in FIG. 5A.

As illustrated in FIG. 5B, the position of volume of liquid 230 within cavity 228 of receiver 220 has changed relative to the position of volume of liquid 230 in FIG. 4B due to the change in orientation vehicle 20. In FIG. 5B, volume of liquid 230 is position along a side of shell 226 due to the gravitational force. However, outlet tube 232 has flexed such that distal end 236 remains in volume of liquid 230 below surface 231. Thus, only working fluid in the liquid phase is configured to exit outlet 224 of receiver 220, even when vehicle 20 has changed in orientation.

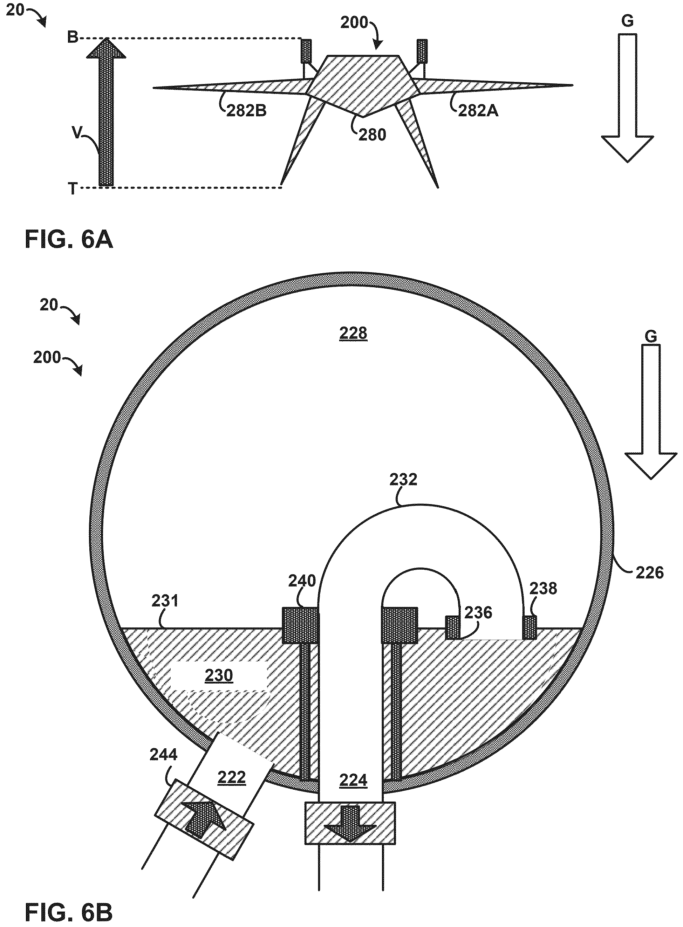

FIG. 6A is a conceptual front view of the example vehicle 20 of FIG. 4A in flight with a changed orientation relative to the orientation of FIGS. 4A and 5A. For example, vehicle 20 is oriented upside down in FIG. 6A, as opposed to the right side up orientation of FIG. 4A and the sideways orientation of FIG. 5A. As such, vector V points in a direction that is substantially opposite the direction of vector G defined by a gravitational force. Put differently, since vector G and vector V point in opposite directions, vehicle 20 is oriented at 180 degrees of rotation. The orientation of FIG. 6A may occur during a roll, turn, or other maneuver of vehicle 20 during operation. FIG. 6B is a conceptual cross-sectional side view of receiver 220 when vehicle 20 is oriented as shown in FIG. 6A.

As illustrated in FIG. 6B, the position of volume of liquid 230 within cavity 228 of receiver 220 has changed relative to the position of volume of liquid 230 in FIG. 4B due to the change in orientation vehicle 20. In FIG. 6B, volume of liquid 230 is position near the top of shell 226 near inlet 222 and outlet 224 due to the gravitational force. Check valve 244 may prevent working fluid from backflowing out of inlet 222.

Outlet tube 232 has flexed such that distal end 236 remains in volume of liquid 230 below surface 231. Thus, only working fluid in the liquid phase is configured to exit outlet 224 of receiver 220, even when vehicle 20 has changed in orientation such that the vehicle is upside down.

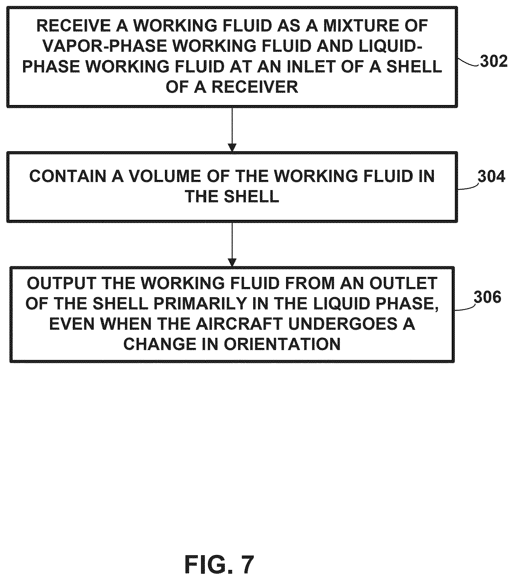

FIG. 7 is a flowchart illustrating an example technique for providing thermal management for an aircraft, in accordance with one or more examples of the present disclosure. The technique of FIG. 7 may be performed by thermal energy management system of FIGS. 1-3 or thermal energy management system 200 of FIGS. 4A-6B, although other thermal energy management systems may perform the described techniques and the described thermal energy management systems may be used to perform other techniques. The technique of FIG. 7 will be described with reference to thermal energy management system 100 of FIGS. 1-3.

Receiver 120 may receive a working fluid as a mixture of vapor-phase working fluid and liquid-phase working fluid at inlet 222 (302). The working fluid may be received from condenser 108.

Shell 126 may contain a volume of working fluid within cavity 128 (304). In some examples, a portion of the working fluid is in the liquid phase as volume of liquid 130.

Outlet 124 may output the working fluid primarily in the liquid phase from shell 126 of receiver 120, even when vehicle 10 undergoes a change in orientation

(306). In some examples, the liquid-phase working fluid may be completely or nearly free of working fluid in the vapor phase. In some examples, receiver 120 may include outlet tube 132 which defines distal end 136. Outlet tube 132 may flex to maintain distal end 136 below surface 131 of volume of liquid 130 during the change in orientation of vehicle 10. When the position of volume of liquid 130 within shell 126 changes due to a change in orientation of the aircraft, outlet tube 132 may flex such that distal end 136 follows the position of volume of liquid 130, and outlet 124 may continue to only outlet working fluid in the liquid phase to expansion valve 110.

The following numbered clauses illustrate one or more aspects of the devices and techniques described herein:
Clause 1: A thermal energy management system for a vehicle includes an expansion valve; and a receiver positioned upstream of the expansion valve includes a shell configured to contain a volume of a working fluid includes an inlet configured to receive the working fluid as a mixture of vapor-phase working fluid and liquid-phase working fluid; and an outlet configured to outlet the working fluid primarily in the liquid phase, even when the vehicle undergoes a change in orientation.
Clause 2: The thermal energy management system of clause 1, wherein the outlet is configured to outlet the working fluid in only the liquid phase.
Clause 3: The thermal energy management system of any of clauses 1 and 2, wherein the change in orientation is such that the vehicle transitions from being right side up relative to a vector defined by a gravitational force when the vehicle is grounded and at rest to being upside down relative to the vector.
Clause 4: The thermal energy management system of any of clauses 1 through 3, wherein both the inlet and the outlet are positioned on an upper portion of the shell relative to a vector defined by a gravitational force when the vehicle is grounded and at rest.
Clause 5: The thermal energy management system of clause 4, further comprising an outlet tube, the outlet tube configured to extend from a first end at the outlet to a second end below a minimum liquid level of the working fluid in the shell.
Clause 6: The thermal energy management system of clause 5, wherein a position of a volume of liquid-phase working fluid in the shell changes in response to a change in orientation of the vehicle, wherein the outlet tube is a flexible tube configured to change shape or orientation in response to a change in orientation of the vehicle such that a distal end of the outlet tube remains in the volume of liquid.
Clause 7: The thermal energy management system of clause 6, wherein the outlet tube comprises a gravitational weight at a distal portion of the outlet tube, the gravitational weight configured to cause the outlet tube to change shape in response to a change in orientation of the vehicle.
Clause 8: The thermal energy management system of clause 7, further comprising a support member, the support member surrounding the outlet tube in a middle portion of the outlet tube and locking the middle portion of the outlet tube in a fixed position during a change in orientation of the vehicle.
Clause 9: The thermal energy management system of clause 8, further comprising a one-way valve positioned along the outlet tube, the one-way valve configured to prevent backflow of the working fluid into the shell.
Clause 10: The thermal energy management system of any of clauses 1 through 9, wherein the shell is substantially spherical in shape.
Clause 11: The thermal energy management system of clause 10, wherein the inlet and the outlet are separated by an angle of less than about 45 degrees.
Clause 12: The thermal energy management system of any of clauses 1 through 11, wherein the thermal energy management system is a closed-loop thermal energy management system comprising the receiver, the expansion valve, an evaporator, a compressor, and a condenser.
Clause 13: The thermal energy management system of clause 12, further comprising the working fluid, wherein the working fluid comprises a refrigerant.
Clause 14: A receiver for a thermal energy management system of a vehicle includes a shell configured to contain a volume of a working fluid includes an inlet configured to receive the working fluid as a mixture of vapor-phase working fluid and liquid-phase working fluid; and an outlet configured to outlet the working fluid primarily in the liquid phase, even when the vehicle undergoes a change in orientation.
Clause 15: The receiver of clause 14, wherein the outlet is configured to outlet the working fluid in only the liquid phase.
Clause 16: The receiver of any of clauses 14 and 15, wherein the change in orientation is such that the vehicle transitions from being right side up relative to a vector defined by a gravitational force when the vehicle is grounded and at rest to being upside down relative to the vector.
Clause 17: The receiver of any of clauses 14 through 16, wherein both the inlet and the outlet are positioned on an upper portion of the shell relative to a vector defined by a gravitational force when the vehicle is grounded and at rest.
Clause 18: The receiver of clause 17, further comprising an outlet tube, the outlet tube configured to extend from a first end at the outlet to a second end below a minimum liquid level of the working fluid in the shell.
Clause 19: The receiver of clause 18, wherein a position of a volume of liquid in the shell changes in response to a change in orientation of the vehicle, wherein the outlet tube is a flexible tube configured to change shape or orientation in response to a change in orientation of the vehicle such that a distal end of the outlet tube remains in the volume of liquid.
Clause 20: The receiver of clause 19, wherein the outlet tube comprises a gravitational weight at a distal portion of the outlet tube, the gravitational weight configured to cause the outlet tube to change shape in response to a change in orientation of the vehicle.
Clause 21: The receiver of any of clauses 18 through 20, further comprising a support member, the support member surrounding the outlet tube in a middle portion of the outlet tube and locking the middle portion of the outlet tube in a fixed position during a change in orientation of the vehicle.
Clause 22: A vehicle includes a thermal energy management system includes an expansion valve; and a receiver positioned upstream of the expansion valve includes a shell configured to contain a volume of a working fluid includes an inlet configured to receive the working fluid as a mixture of vapor-phase working fluid and liquid-phase working fluid; and an outlet configured to outlet the working fluid primarily in the liquid phase, even when the vehicle undergoes a change in orientation.
Clause 23: A method for providing thermal management for a vehicle includes receiving a working fluid as a mixture of working fluid as a mixture of vapor-phase working fluid and liquid-phase working fluid at an inlet of a shell of a receiver, the receiver positioned upstream of an expansion valve of a thermal energy management system of a vehicle; containing a volume of the working fluid in the shell; and outputting the working fluid from an outlet of the shell of the receiver primarily in the liquid phase, even when the vehicle undergoes a change in orientation.

Various examples have been described. These and other examples are within the scope of the following claims.

## Claims

1. A thermal energy management system for a vehicle, the system comprising:
an expansion valve; and
a receiver positioned upstream of the expansion valve, the receiver comprising:
a shell configured to contain a volume of a working fluid, the shell comprising:
an inlet configured to receive the working fluid as a mixture of vapor-phase working fluid and liquid-phase working fluid; and
an outlet configured to outlet the working fluid primarily in the liquid phase, even when the vehicle undergoes a change in orientation.

2. The thermal energy management system of claim 1, wherein the outlet is configured to outlet the working fluid in only the liquid phase.

3. The thermal energy management system of claim 1, wherein the change in orientation is such that the vehicle transitions from being right side up relative to a vector defined by a gravitational force when the vehicle is grounded and at rest to being upside down relative to the vector.

4. The thermal energy management system of claim 1, wherein both the inlet and the outlet are positioned on an upper portion of the shell relative to a vector defined by a gravitational force when the vehicle is grounded and at rest.

5. The thermal energy management system of claim 4, further comprising an outlet tube, the outlet tube configured to extend from a first end at the outlet to a second end below a minimum liquid level of the working fluid in the shell.

6. The thermal energy management system of claim 5, wherein a position of a volume of liquid-phase working fluid in the shell changes in response to a change in orientation of the vehicle,
wherein the outlet tube is a flexible tube configured to change shape or orientation in response to a change in orientation of the vehicle such that a distal end of the outlet tube remains in the volume of liquid.

7. The thermal energy management system of claim 6, wherein the outlet tube comprises a gravitational weight at a distal portion of the outlet tube, the gravitational weight configured to cause the outlet tube to change shape in response to a change in orientation of the vehicle.

8. The thermal energy management system of claim 7, further comprising a support member, the support member surrounding the outlet tube in a middle portion of the outlet tube and locking the middle portion of the outlet tube in a fixed position during a change in orientation of the vehicle.

9. The thermal energy management system of claim 8, further comprising a one-way valve positioned along the outlet tube, the one-way valve configured to prevent backflow of the working fluid into the shell.

10. The thermal energy management system of claim 1, wherein the shell is substantially spherical in shape.

11. The thermal energy management system of claim 10, wherein the inlet and the outlet are separated by an angle of less than about 45 degrees.

12. The thermal energy management system of claim 1, wherein the thermal energy management system is a closed-loop thermal energy management system comprising the receiver, the expansion valve, an evaporator, a compressor, and a condenser.

13. The thermal energy management system of claim 12, further comprising the working fluid, wherein the working fluid comprises a refrigerant.

14. A receiver for a thermal energy management system of a vehicle, the receiver comprising:
a shell configured to contain a volume of a working fluid, the shell comprising:
an inlet configured to receive the working fluid as a mixture of vapor-phase working fluid and liquid-phase working fluid; and
an outlet configured to outlet the working fluid primarily in the liquid phase, even when the vehicle undergoes a change in orientation.

15. A vehicle comprising:
a thermal energy management system, the system comprising:
an expansion valve; and
a receiver positioned upstream of the expansion valve, the receiver comprising:
a shell configured to contain a volume of a working fluid, the shell comprising:
an inlet configured to receive the working fluid as a mixture of vapor-phase working fluid and liquid-phase working fluid; and
an outlet configured to outlet the working fluid primarily in the liquid phase, even when the vehicle undergoes a change in orientation.
